# EUROPEAN PATENT APPLICATION

(11) **EP 4 775 104 A1**
(43) Date of publication of application: **15.07.2026**
(21) Application number: 25226045.0
(22) Date of filing: 19.12.2025
(51) Int. Cl.: A47J 39/00

(54) **WARMING HOLDING CABINET**

(30) Priority: 27.12.2024 US 202463739180 P
(71) Applicant: Carter-Hoffmann LLC, Mundelein, IL 60060 (US)
(72) Inventor: RUSSELL, Gary A, Mundelein, 60060 (US); PUSHPALA, Sreekanth, Mundelein, 60060 (US)
(74) Representative: Mathys & Squire

(57) **Abstract**

A holding cabinet is provided and includes a housing with a receiving cavity and an air flow compartment, the receiving cavity includes opposite first and second openings that each receive at least two doors that are each rotatably disposed with respect to the housing to be independently in a first open position to allow food items to be inserted within and removed from the receiving cavity and a second closed position, each of the at least two doors upon each of the respective first and second openings have a horizontal pivot axis; each of the at least two doors include a first blocking portion disposed upon a first side of the horizontal pivot axis, and a second counterweight portion disposed on a second side of the horizontal pivot axis that is opposite from the first side of the horizontal pivot axis.

## Description

### CROSS-REFERENCE TO RELATED APPLICATIONS

This application claims priority from United States Provisional Application No. 63/739,180, filed on December 27, 2024, the entirety of which is hereby incorporated by reference herein.

### BACKGROUND OF THE INVENTION

This disclosure relates to holding cabinets to receive previously cooked food to maintain them warm for future presentation to a customer or for future processing before serving to a customer.

### BRIEF SUMMARY

A first representative embodiment of the disclosure is provided. The embodiment includes a holding cabinet. The holding cabinet includes a housing that includes a receiving cavity and an air flow compartment, the receiving cavity is configured to support two or more shelves therein in a vertically stacked arrangement with respective one or more spaces within the receiving cavity disposed vertically between the two or more shelves; the air flow compartment comprises a heat treatment portion and a return portion; the receiving cavity includes first and second openings and right and left vertical side walls, a ceiling above the first and second openings and the right and left vertical walls, and a floor below the first and second openings and the right and left vertical walls, the first and second openings provided upon opposite sides of the receiving cavity; each of the first and second openings receive at least two doors that are each rotatably disposed with respect to the housing to be independently in a first open position to allow food items to be inserted within and removed from the receiving cavity and a second closed position to prevent food items from being inserted within and removed from the receiving cavity, each of the at least two doors upon each of the respective first and second openings have a horizontal pivot axis; each of the at least two doors include a first blocking portion disposed upon a first side of the horizontal pivot axis, and a second counterweight portion disposed on a second side of the horizontal pivot axis that is opposite from the first side of the horizontal pivot axis.

Other representative embodiments of the disclosure are of the scope of Numbered Paragraphs 1-16 that are provided at the end of this specification as well as combinations of two or more Numbered Paragraphs.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a first perspective view of a holding cabinet with a first set of inner doors in an open position and an opposite set of inner doors in a closed position.
FIG. 1A is the view of FIG. 1 with an outer door that holds the first set of inner doors also in an open position.
FIG. 2 is a lower first perspective view of the holding cabinet of FIG. 1.
FIG. 3 is a perspective view of opposite side of the holding cabinet of FIG. 1.
FIG. 3A is a perspective view of the opposite side of the holding cabinet of FIG. 1 with the outer door on the opposite side open with the inner doors in a closed position, and the inner doors on the first side open of the holding cabinet in an open position.
FIG. 4 is a perspective sectional view of the holding cabinet about section A-A of FIG. 1.
FIG. 5 is a view of detail B of FIG. 4 from a lower perspective than the perspective of FIG. 4.
FIG. 6 is a view of detail D of FIG. 4 from a lower perspective than the perspective of FIG. 4.
FIG. 7 is a side view of the detail of FIG. 6.
FIG. 8 is another side view of the detail of FIG. 8 showing the door in a closed position.
FIG. 8A is the view of FIG. 8 with the door rotated and translated away from the closed position.
FIG. 9 is another sectional view of the housing depicting the internal air flows through the receiving volume and the air handling volume.
FIG. 10 is a view of detail E of FIG. 4.

### DETAILED DESCRIPTION OF THE INVENTION

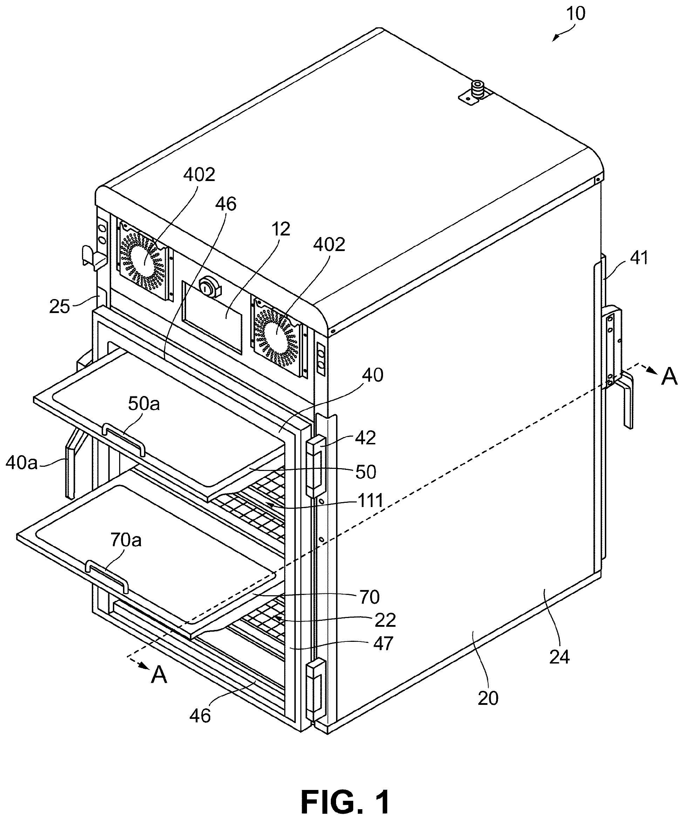

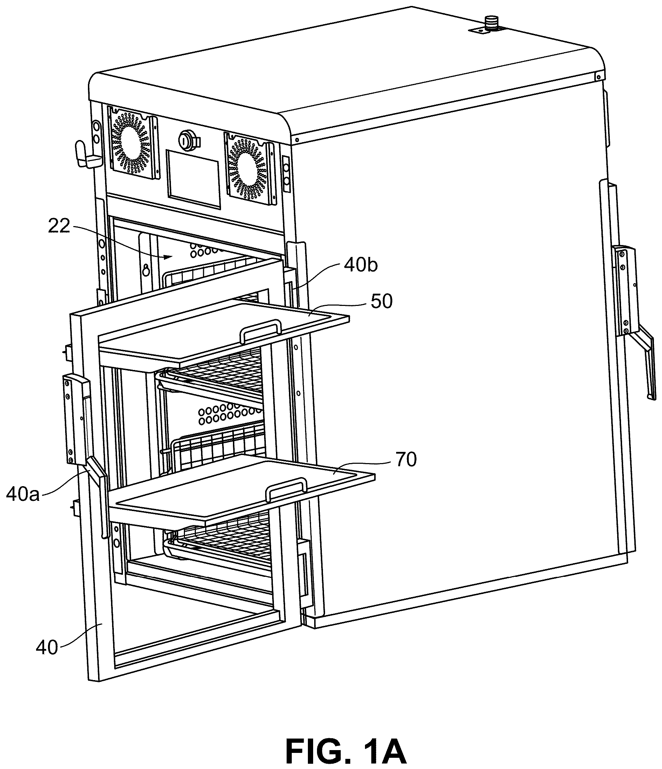

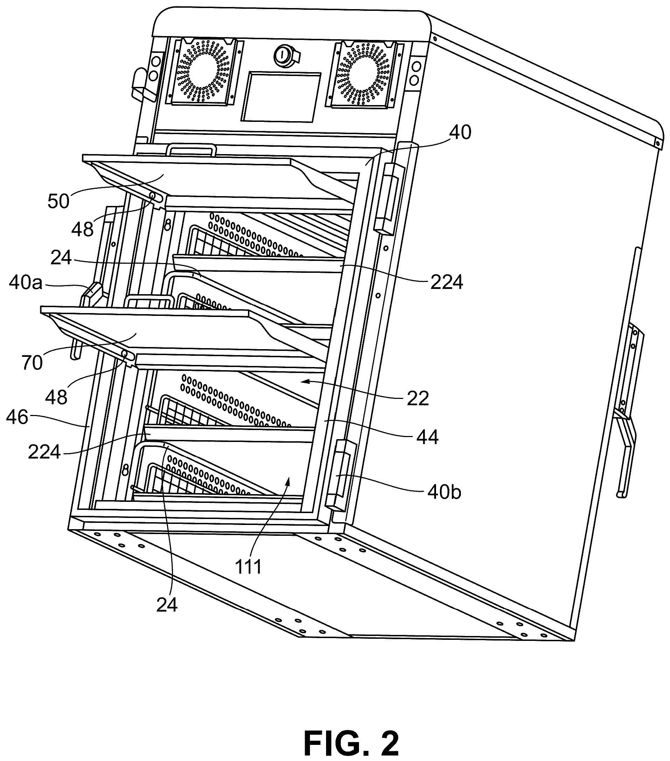

Turning now to FIGs. 1-10, a holding cabinet 10 is provided. The holding cabinet 10 is configured to hold cooked food items for a period of time before presentation to a customer or until the cooked food items are used in another step in a preparation or cooking procedure. The holding cabinet 10 is configured to create a warming environment, which can provide heat to food items within the receiving cavity 22 or all of conduction heat transfer, convection heat transfer, and radiant heat transfer to the food items. The structure and operation associated with each of these three types of heat transfer to the food within the holding compartments is discussed below.

The holding cabinet 10 may be configured to hold any types of foods that need to be or are best maintained in a hot or warm environment before serving or further using in a cooking or preparation process. The holding cabinet 10 in some embodiments may be configured to receive food upon trays 224 that rest upon shelves 24 within the receiving cavity 22. In some embodiments a rack 225 may be provided upon respective trays 224, or a rack 225 may be provided directly upon a shelf 24. The trays 224 and the rack 225 may be conventional trays within the restaurant industry, or may be specific sized for the type of food to be stored upon the trays/racks. In some food storage procedures (or recipes) a liquid may be disposed within the bottom surface 601 of the tray and the food resting upon the rack may be able the liquid. As can be understood with by one of ordinary skill in the art with a thorough review of the subject specification, the liquid may boil, which creates a steam within the holding compartment 32, 34 to further warm or cook the food.

The holding cabinet 10 includes a housing 20 that encloses a receiving cavity 22. In a first embodiment, the housing may have a single receiving cavity 22, while in other embodiments, the housing 20 may have two or more separated receiving cavities to allow for storing different foods within the different receiving cavities - such as at a different regulated temperature. In embodiments with two or more separated receiving cavities, the number of receiving cavities may equal the number of doors 50, 70, discussed below.

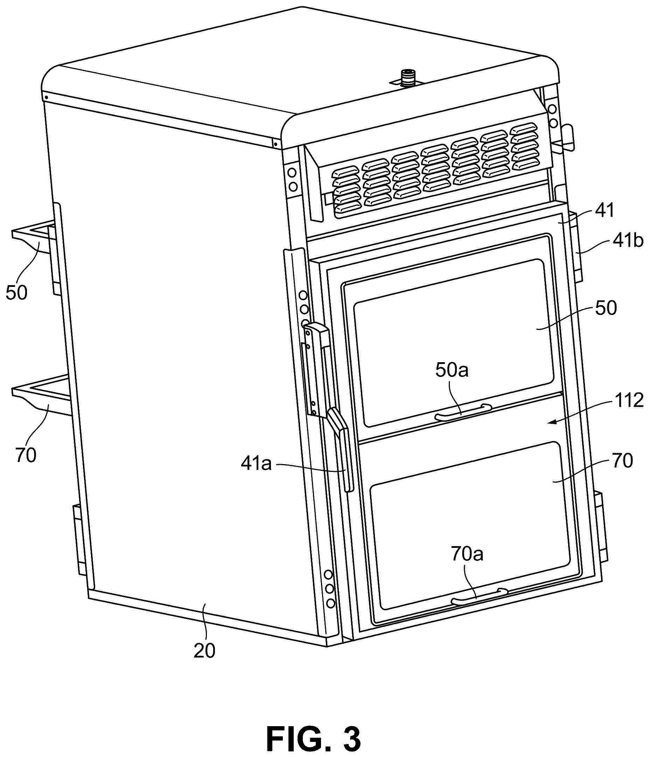

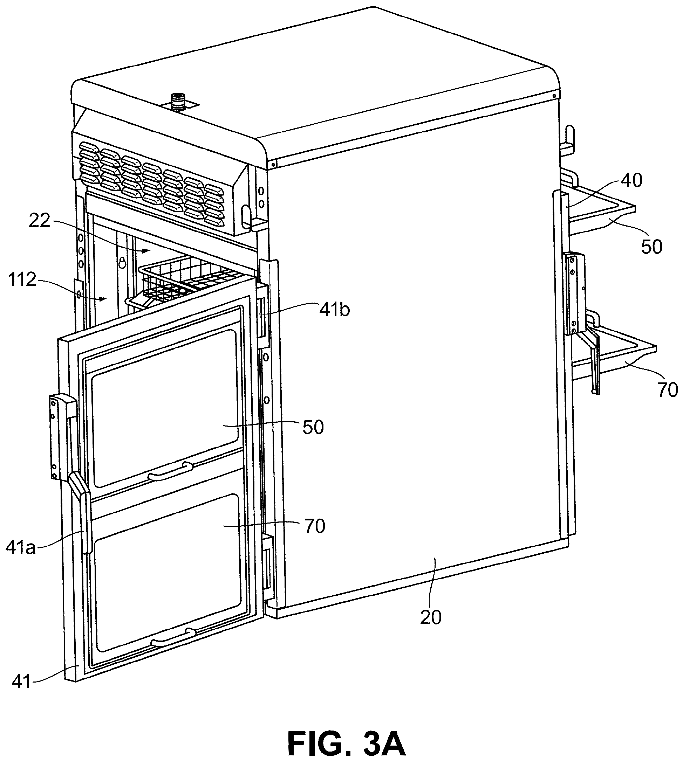

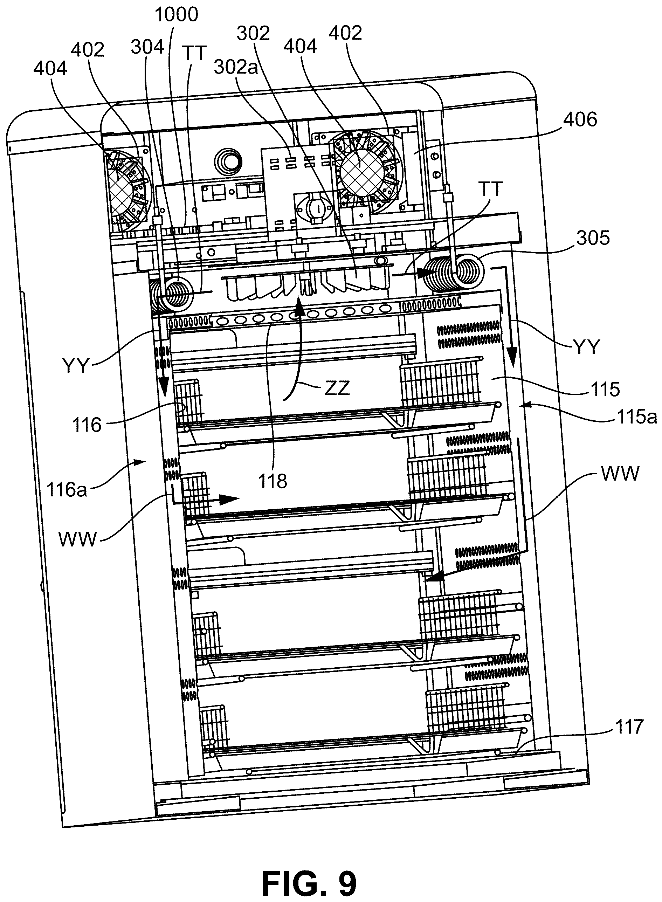

The receiving cavity 20 may include a floor 117, a ceiling 118, a left vertical wall 115, and a right vertical wall 116 (FIG. 9). The receiving cavity includes a first opening 111 that extends between the left and right vertical walls and the floor 117 and ceiling 118, and a second opening 112 that also extends between the left and right vertical walls 115, 116, the floor 117 and the ceiling 118, with the first and second openings 111, 112 being disposed upon opposite ends of the housing 20. The first and second openings 111, 112 are configured to allow trays 224, racks 225 and individual food pieces (not shown, conventional - such as fried chicken pieces) to be placed into the receiving cavity 22 of the housing 20 or removed from the receiving cavity 22 of the housing 20. The first and second openings 111 and 112 are preferably slightly wider than the width of the trays 224, 225 that are configured to be used within the housing so that the racks and trays can be inserted or removed from the receiving cavity 22 horizontally. Typically the trays and racks 224, 225 will be installed or removed from the receiving cavity 22 when the respective outer doors 40, 41 are in the open position (FIGs. 1A, 3A). As discussed below, each outer door 40, 41 has one, or preferably two or more, inner doors (e.g. 50, 70) disposed thereon that can rotated between open and closed positions when the respective outer door 40, 41 that supports the inner doors is in the closed position upon the housing (FIGs. 1, 2, 3). The inner doors 50, 70 may be configured, when in the open position (e.g. FIG. 1) to allow the placement or removal of individual food items onto the trays 224 or racks 225 that are within the inner volume. In embodiments where there are more vertical positions for the placement of trays or racks vertically within the receiving cavity 22, each inner door 50, 70 is positioned and sized such that the user can remove food from or place food onto positioned trays or racks at least two different heights within the receiving cavity 22.

The first and second outer doors 40, 41 are pivotably connected to the housing 20 with vertical hinges 40b, 41b. The hinges can connect the door to either side of the housing 20, so that the doors 40, 41 can either open rightward or leftward as desired by the user for ergonomic use within the space where the unit is located.

As best shown in FIG. 1 and 3, the first outer door 40 may support first and second inner doors 50, 70 that are disposed vertically aligned, with the first inner door 50 being positioned vertically above the second inner door 70. In other embodiments, the housing 20 may be sized such that each outer door 40, 41 supports three or more inner doors. In that embodiment, the top-most inner door would be constructed and operate as in the top-most door 50 described herein, and the middle one or more doors and the lowest door would be constructed and operate list the second inner door 70 discussed herein.

In other embodiments the housing 20 does not include the first and/or second outer doors 40, 41 and instead the first and second inner doors 50, 70 are mounted directly to the housing 20. In some embodiments, the housing includes one outer door (40, 41) that supports first and second inner doors 50, 70, and the opposite side of the housing does not include an outer door and the first and second inner doors 50, 70 are mounted directly to the housing 20.

The first and second outer doors 40, 41 are best shown in FIGs. 1-4. The outer doors include a frame 46, which is typically rectangular with vertical jams 47 being longer than horizontal styles 46, but can also be square or other geometric shapes. The frame includes right and left vertical jams 47 and top and bottom horizontal styles 46. The space defined within the frame receives the top and bottom doors 50, 70. The right and left jams 47 support a pin 48 or other cylindrical member that extends therefrom, with the pins 48 from opposite right and left jams 47 extending colinearly. In embodiments where two inner doors (50, 70) are provided upon each outer door 40, 41, each jam includes two spaced apart pins 48 to support the two vertically aligned inner doors 50, 70. The pins 48 are received within slots 54 upon each side of the respective inner door, with the size of the slot 54 constraining the relative motion of the respective inner door with respect to the jam 47 of the outer door. The slot extends from a first end 54a to a second end 54b. As discussed below, when the respective inner door is in the closed position, the pin 48 contacts the first end 48a, and when the door is in the open position the pin 48 contacts the opposite end 54b.

Each of the right and left jams 47 includes a first surface 47a that faces the opposite right and left jam 47 (specifically the first surface 47a of the opposite jam) and an inner facing surface 47b that faces the receiving cavity 22 of the housing 20 The pins 48 each extend from the first surface 47a of the respective jam 47. In some embodiments, the inner doors 50, 70 may be flush mounted with respect to the frame of the outer door 40, 41 that supports the inner doors 50, 70 such that an outer surface of each inner door 50, 70 is substantially flush (planar) with an outer facing surfaces of the frame (i.e. the vertical jams 47 and the styles 46) when the inner doors 50, 70 are in the closed position. In other embodiments, the outer and inner doors may be designed with respect to each other such that the inner doors 50, 70 are inset with respect to the outer facing surfaces of the frame of the outer doors 40, 41 when the inner doors are in the closed position, and in still other embodiments, the outer facing surfaces of the inner doors 50, 70 may be disposed outside of the outer facing surfaces of the frame of the outer doors 40, 41 when the inner doors are in the closed position. One of ordinary skill in the art will appreciate after a thorough review and understand of this specification that the relative positioning of the inner doors 50, 70 with respect to the outer doors 40, 41 when the inner doors 50, 70 are in the closed position is based upon ornamental design choice and one of ordinary skill in the art would be able to construct the housing 20 with the desired relative positioning of the inner doors 50, 70 with respect to the outer doors 40, 41 with merely routine optimization based upon the understanding gained within this specification.

Each inner door 50, 70 has a first blocking portion 52, 73 and a second counterweight portion 53, 73. The blocking portions 52, 72 perform the blocking function of the inner door to, when the inner doors are in a closed position, retain heat and air flow within the receiving cavity 22 of the housing 20, and prevent air flow or foreign matter from flowing into the receiving cavity 22 when the doors 50, 70 are in the closed position. The first and second inner doors 50, 70 are configured such that one of the doors may be in the open position and the other of the doors is in the closed position, and each of the first and second inner doors 50, 70 are free to move between positions independently of the other inner door that is supported upon the outer door 40, 41. The blocking portions 52, 72 may have an outer structural frame and a central window portion that allow visual inspection of the receiving cavity 22 within the housing 20 when the respective door is in the closed position.

The slots 54 upon both sides of each inner door are arranged upon the same relative position upon each side of the door, i.e. the upper edge 54a of the slot is at the same height (or distance below a top edge 53aa of the counterweight portion 53 and at a same width position, and the lower edges 54b of each slot on opposite sides of the door is similarly positioned upon the door.

The counterweight portion 53, 73 is disposed upon an opposite side of the slot as the blocking portion 52, 72 of the respective inner door 50, 70. The counterweight portion is preferably constructed with a mass that creates substantially the same torque felt upon the pin 48 as the opposite torque created by the mass of the blocking portion of the same door when the door is in the open position. The construction of the counterweight portion 53, 73 allows the center of mass of the door when in the open position to be positioned exactly vertically aligned with, or substantially vertically aligned with, the pin 48 when the door is in the open position, which causes the door to be maintained in the open position, and tend to return to the open position if the door 50, 70 is only slightly bumped or only a small force is applied to the door when in the open position (such as by inadvertently bumping into an inner surface of the door by the user or something being held by the user when the user is inserting items through the opening to access the receiving cavity 22 of the housing below the respective inner door when in the open position). The counterweight portion 53, 73 may be formed with steel and with layers of steel sheets disposed therein, to increase the mass within the counterweight portion, to increase the torque produced by the counterweight portion when in the open position.

Each door 50, 70 may include a tab 56 that extends outwardly from an inner facing surface of each door (or may extend from a side facing surface of each door, or from an edge therebetween). The tab 56 may have a rise portion 56b that extends in a direction toward the receiving cavity 22 of the housing 20 (when the respective door is properly installed with respect the housing 20) and a run portion 56a that extends parallel to an inner facing surface 47a of a vertical jam 47 of the outer door 40, 41 that supports the respective inner door. In some embodiments, the run portion 56a may be exactly parallel or it may be substantially parallel to the inner facing surface 47a of the vertical jam 47.

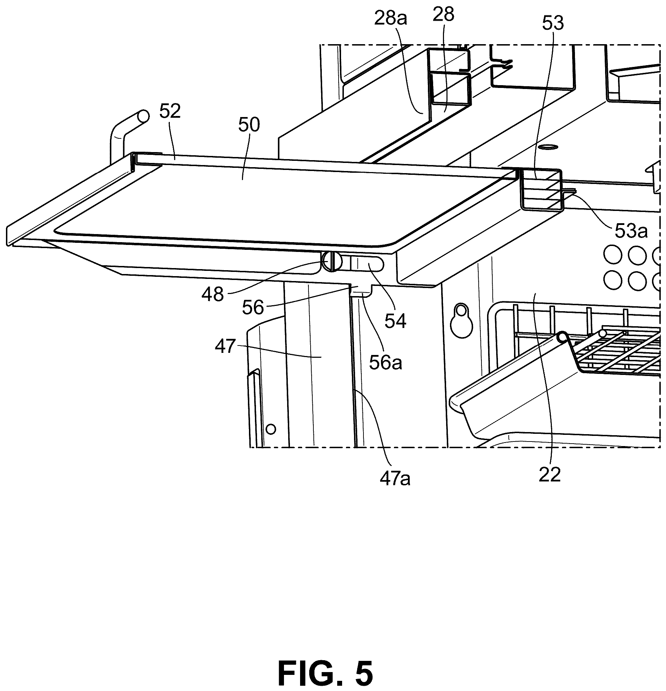

As depicted in FIG. 5, the tab 56 is provided such that the run portion 56a contacts the inner facing surface 47a of the vertical jam 47 when the door is in the open portion, with the contact therebetween preventing any further rotation of the door in the rotational direction from the closed position toward the open position. The tab 56 is sized and positioned such that the run portion 56a contacts the inner facing surface 47a when the center of mass is aligned with the pin 48, such that the tab merely provides prevent from the door further rotating away from the closed position (but the respective inner door would be maintained in the open position due to the aligned position of the center of pass with respect to the pin 48 even if the tab was not provided). In some embodiments, the run portion 56a of the tab 56 may contact the inner surface 47a of the vertical jam 47 before the pin 48 reaches the second end 54b of the slot 54.

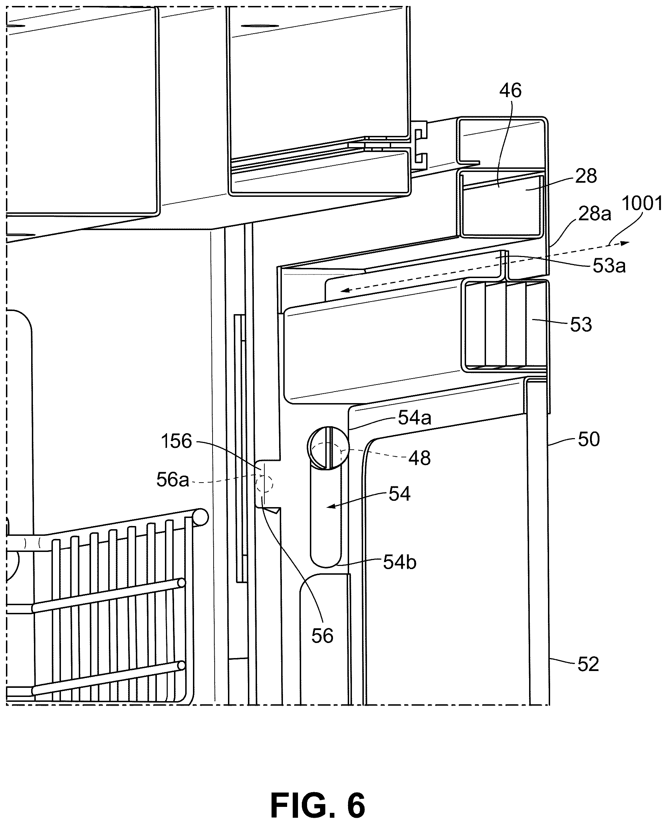

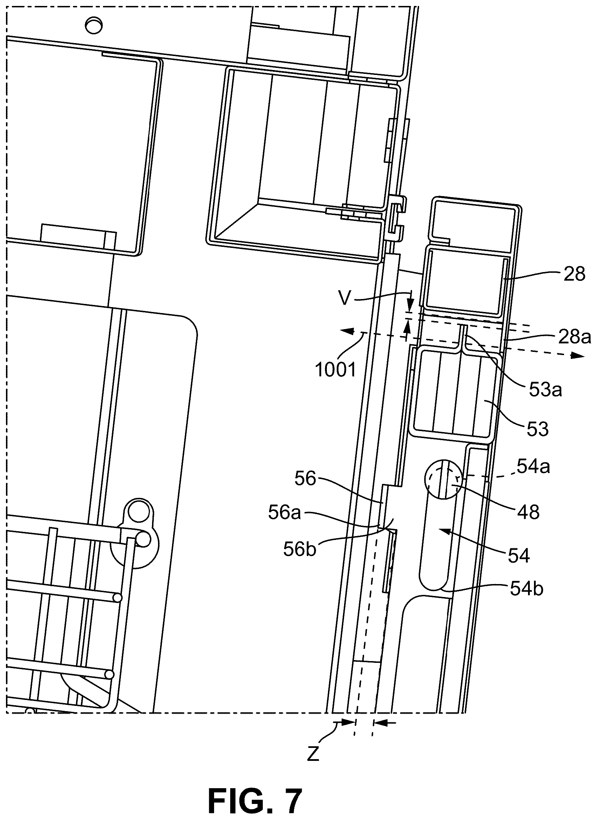

FIGs. 6-8A depict an inner door (e.g. 50 in the figures, but the lower door 70 would be similar in many respects, with the differences discussed below) in the closed position. As shown in FIG. 6, the pin 48 contacts the first end 54a of the slot 54 and as depicted in FIG. 7 there is a space Z between the run portion 56a of the tab 56 and the inner facing surface 47a of the vertical jam 47 (the space is sized due to the length of the rise portion 56b of the tab 56). In some embodiments a compressible material is positioned to be between the run portion 56a of the tab 56 and the vertical jam 47 when the door is in the closed position, to prevent the tab 56 from banging against the vertical jam 47 if the door moves toward the closed position in a rapid and uncontrolled fashion.

The counterweight portion 53 may include a flange 53a that extends out from a body of the counterweight portion, with the flange extending parallel or substantially parallel to the inner or outer facing surfaces of the respective door (i.e. the surfaces that are vertical or substantially vertical when the door is in the closed position). The flange 53a extends toward a bottom surface of the rail 46 above the (top most) inner door 50. The flange 53a may be spaced from the bottom surface of the rail 46 by a space V (FIG. 7, which allow the door to be pulled upwardly with respect to the frame 46 of the outer door for a distance V when the inner door remains in the (typically vertical or substantially vertical) orientation when the inner door is in the closed position.

The flange 53a (upon the top most door within an outer door 40, 41 (or directly connected to the housing in other embodiments) may extend above a lower edge of a front face 28a of the top rail 46 of the door - such that a horizontal line 1001 extends through bodies of both the flange 53a and the front face 28a. This establishes a tortious path for air to flow into our out of the receiving cavity 22 of the housing 20 when the respective inner door 50 is in the closed position.

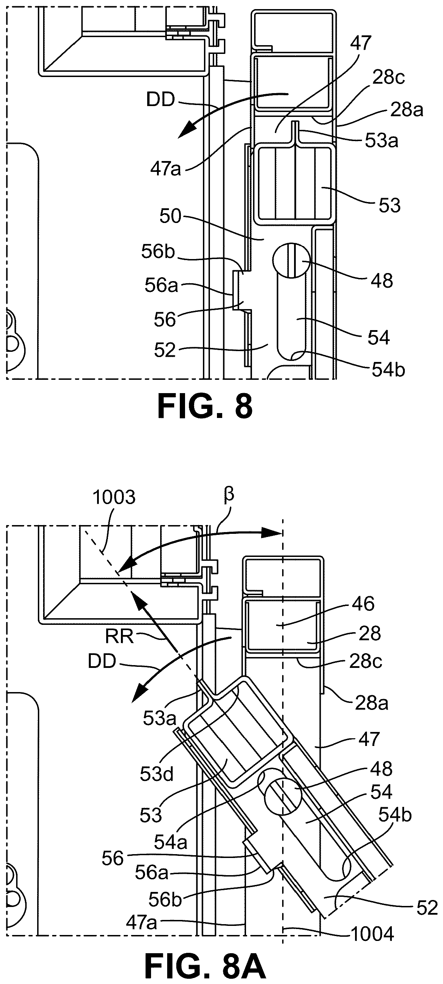

FIGs. 8 and 8A depict the process for an inner door (specifically the top most inner door within an outer door 40, 41) to move from the closed position (FIG. 8) toward the open position (FIG. 8A). When it is desired to move the door from the closed position toward the open position, the door can initially rotate about the pin 48 (direction DD) until the run portion 56a of the tab 56 contacts the inner surface 47a of the vertical jam 47. With some rotation, the door 50 can be raised (direction RR) with respect to the jam 47 (more than the distance V of FIG. 7) due to the rotation of the door 50 so that an axis 1003 through the door forms an acute angle β with respect to a vertical line 1004 that extends parallel to and aligned through the vertical jam 47. As the door is rotated in direction DD, the top edge of the flange 53a moves with respect to the bottom surface 28c of the top rail 46 such that the distance from the top edge of the flange 53a to the bottom surface (V) increases, thereby allowing the door 50 to be further raised (pin 48 moves within the slot 54 toward the bottom edge 54b), which provided additional clearance between the run portion 56a of the tab 56 and the inner facing surface 47a due to the position of the door 50 with respect to the frame as the door rotates in the direction DD and the pin 48 moves within the slot 54. After sufficient combined rotation of the door and translation of the door 50 (pin 48 moving within the slot 54 toward the second end 54b, the top outer edge 53d of the counterweight portion 53 and the flange 53a are both clear of the bottom surface 28c of the rail 46, which allows the door to be further pulled in the direction RR until the pin 48 approaches or reaches the second end 54b of the slot 54. The door 50 then has clearance to continue rotating in the direction DD until the door 50 has obtained a substantially horizontal position. As discussed above, the rotation of the door 50 is constrained by the run portion 56a of the tab 56 coming into contact with the inwardly facing surface 47a of the vertical jam 47 and the pin 48 reaching the second end 54b of the slot 54. The door 50 can be retained in the open position, as discussed above.

The inner doors 50, 70 may have handles 50a, 70a that allow the user to manipulate the respective door, both lifting (direction RR) and rotating (direction DD). When it is desired to rotate and move the door 50 toward the closed position, the user manipulates the handle to initially rotate the door in the rotational direction opposite to DD and then allows the door to translate in the direction opposite to RR to a position similar to the petition depicted in FIG. 8A. Then the user both rotates and allows the door to translate in the direction opposite to the direction RR, such that the pin 48 moves within the slot 54 toward the first end 54a. After reaching a position similar to FIG. 8A, the sliding and rotation are combined to allow the door to return to the closed position (FIG. 8) as constrained by the lower surface 28c of the upper rail 46 and the flange 53a of the counterweight portion 53 and as constrained by the tab 56 and the inner facing surface 47a of the vertical jam 47.

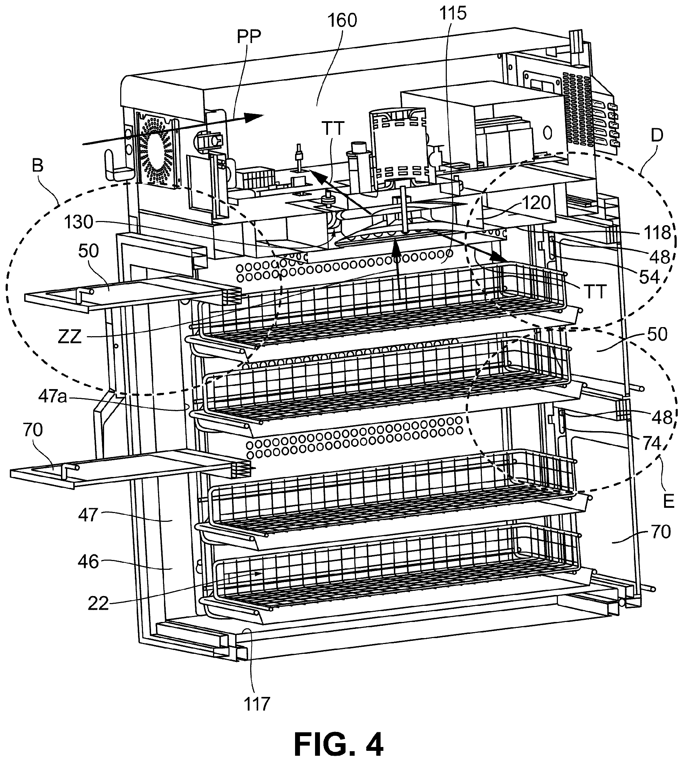

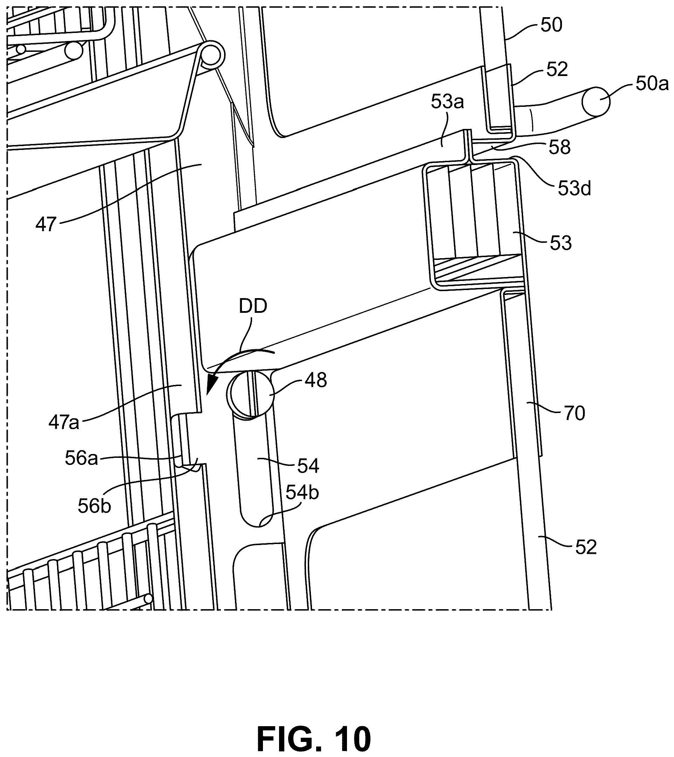

As best understood with review of FIGs. 4 and 10, in the depicted embodiment inner doors (e.g. 70) that are disposed below the top-most door (50) can be rotated freely rotated from the closed position toward the open position - when the door 50 above the door to be rotated remains in the closed position -- without any (not shown) (or a substantial - FIG. 10) need to rotate and translate the door in an iterative (or simultaneous) process as required by the top-most door 50 (other than in the depicted embodiments a very small amount of needed iterative rotating and sliding at the very start of the door 70 rotating away from the closed position toward the closed position) because the flange 53a and/or the front edge 53d of the counterweight portion 53 is clear from the bottom surface 58 of a door (e.g. 50) that is directly above the door 70 and therefore does not block translation of the door in the direction RR after the door 70 has been rotated a small angle β to clear the bottom surface 58. In some embodiments, the angle β that is available for the door 70 to be rotated in the direction DD is small enough that the door can rotate the needed angle β before the run portion 56a of the tab 56 contacts the vertical jam 47. In other embodiments, the door 70 must be slightly translated in the direction RR as well as rotated in the direction DD to clear the counterweight portion 53 from the lower surface 58 of the door above the door to be rotated to allow for clearance for the door 70 to be further translated to allow the pin 48 to reach (or get close to) the second end 54b of the slot 48, to allow the door 70 to fully rotate to the open position. The lower door 70 can rotate from the open position toward the closed position as discussed above (and may need to initially move to a position just clear of the lower surface 58 of the above door 50 - similar to the procedure to close the top-most door 50 discussed above. In some embodiments (FIG. 10) the flange 53a of the lower door 70 contacts an inner facing surface of a lower portion of the blocking portion 52 of the door (50) that is above the door 70 when both doors are in the closed position.

In some embodiments, the inner door (e.g. 50) that is above another door (e.g. 70) has a front face that extends to a position horizontally aligned with the flange 53a of the lower door (such that a horizontal line like line 1001) extends through both the flange 53a and the front face (similar to FIG. 6) to establish a tortuous path for air when both doors 50, 70 are in the closed position.

Turning now to FIGs. 4 and 9, the air flow compartment 120 is depicted and is described below. The air flow compartment includes a fan and heating compartment 130 and a mechanical compartment 160. The fan and heating compartment 130 is disposed above a ceiling 118 within the housing 20 and air from the receiving cavity 22 flows into the fan and heating compartment 130 through holes in the ceiling 118 (air flow ZZ), which are positioned below a suction of the fan 302 disposed within the fan and heating compartment 130. The fan 302 discharges the air horizontally, which is guided left and rightward within the fan and heating compartment 130 (i.e. toward the left and right walls 115, 116 of the housing (air flow TT). Air is blocked from flowing in a direction toward each of the first and second openings (where the doors 40, 41 are positioned).

Air flowing out of the fan (TT) flows across heating elements 304, 305 that are operated to provide heat to the air that flows therepast. Air then flows downwardly (air flow YY) through air flow plenums 115a, 116a disposed outboard of the respective left and right walls 115, 116 that establish the inner chamber 22, and which collectively establish a return portion. The air flows from the plenums 115a, 116a and into the inner chamber 22 (air flow WW) through holes in the respective left and right walls 115, 116 that are aligned to direct the air at the desired positions, such as just above the level of a conventional tray 224 that can rest horizontally with in the chamber 22. The heaters 304, 305 may be operated continuously, on a set duty cycle, or by a controller 1000 (schematic) based upon feedback control based upon one or more sensed air temperatures within the housing, or the controller 1000 may operate the heaters 304, 305 to follow a recipe that corresponds to the food that the housing 20 is aligned to receive. The heaters 304, 305 may also be operated manually by a user (or by the user selecting a recipe) - via an input 12 upon the housing, or with the controller 1000 receiving instructions from a remote source, either through a wired or wireless signal path. The fan 302 may also be operated by the controller 1000 in conjunction with the heating elements 304, 305 as discussed above, or independently of the heating elements 304, 305.

The mechanical compartment 160 is positioned above the fan and heating compartment 130. The mechanical compartment 160 may include the controller 1000, the fan motor 302a, and other electrical components of the unit. The mechanical compartment 160 may include one or more inlet fans 402 that draw air from outside the housing 20 into the mechanical compartment 160 for cooling of the components therein. The mechanical compartment 160 may support a filter 404 that is disposed just downstream of the fan 402 to remove dust or debris that flows through the fan to avoid accumulation within the mechanical compartment 160. The mechanical compartment may include an access window proximate the position of the filter 404 within the mechanical compartment 160 to allow the filter 404 to be conveniently removed and replaced - to ensure continued operation of the filter 404 over time and to allow for replacing / cleaning the filter periodically with use.

The term "about" is specifically defined herein to include a range that includes the reference value and plus or minus 5% of the reference value. The term "substantially the same" is when the item under comparison is within 5% of the aspect of the reference value of the item. The term "substantially" is when the referenced value or referenced aspect is within 5% of the reference value. For example, if the referenced item is an angle, something is substantially at that angle if it is within plus or minus 5% of the angle. The term "substantially" referenced with respect to a state (e.g. a path being substantially blocked) means that referenced state is blocked but may allow for di minimus flow therepast. The term "substantially" is when the term under comparison is not the exact same item (such as shape or length) as mentioned but with only di minimus changes from the referenced item as those di minimus changes would be appreciated by one or ordinary skill in the art, such as changes that do not significantly affect the structure of function of the item. The term "support" may be direct support (i.e. one item is directly supported by another other item - typically with contact therebetween) as well as indirect support (i.e. one item supports another item due to an intervening member that is typically on contact with both items and the supporting force is transferred through the intervening member).

The computing elements or functions disclosed herein (such as the controller 1000) may include a processor and a memory storing computer-readable instructions executable by the processor. In some embodiments, the processor is a hardware processor configured to perform a predefined set of basic operations in response to receiving a corresponding basic instruction selected from a predefined native instruction set of codes. Each of the modules defined herein may include a corresponding set of machine codes selected from the native instruction set, and which may be stored in the memory. Embodiments can be implemented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, optical disc, memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described embodiments can also be stored on the machine-readable medium. Software running from the machine- readable medium can interface with circuitry to perform the described tasks. Moreover, embodiments may be implemented on application specific integrated circuits (ASICs) or very large scale integrated (VLSI) circuits. In fact, persons of ordinary skill in the art may utilize any number of suitable structures capable of executing logical operations according to the embodiments.

Naturally, in view of the teachings and disclosures herein, persons having ordinary skill in the art may appreciate that alternate designs and/or embodiments of the invention may be possible (e.g., with substitution of one or more components for others, with alternate configurations of components, etc.). Although some of the components, relations, configurations, and/or steps according to the invention are not specifically referenced and/or depicted in association with one another, they may be used, and/or adapted for use, in association therewith. All of the aforementioned and various other structures, configurations, relationships, utilities, any which may be depicted and/or based hereon, and the like may be, but are not necessarily, incorporated into and/or achieved by the invention. Any one or more of the aforementioned and/or depicted structures, configurations, relationships, utilities and the like may be implemented in and/or by the invention, on their own, and/or without reference, regard or likewise implementation of any of the other aforementioned structures, configurations, relationships, utilities and the like, in various permutations and combinations, as will be readily apparent to those skilled in the art, without departing from the pith, marrow, and spirit of the disclosed invention

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification can be readily understood with reference to the following Numbered Paragraphs:
Numbered Paragraph 1: A holding cabinet, comprising:
   a housing that includes a receiving cavity and an air flow compartment, the receiving cavity is configured to support or more shelves therein in a vertically stacked arrangement with respective one or more spaces within the receiving cavity disposed vertically between the two or more shelves;
   the air flow compartment comprises a heat treatment portion and a return portion;
   the receiving cavity includes first and second openings and right and left vertical side walls, a ceiling above the first and second openings and the right and left vertical walls, and a floor below the first and second openings and the right and left vertical walls, the first and second openings provided upon opposite sides of the receiving cavity;
   each of the first and second openings receive at least two doors that are each rotatably disposed with respect to the housing to be independently in a first open position to allow food items to be inserted within and removed from the receiving cavity and a second closed position to prevent food items from being inserted within and removed from the receiving cavity,
   each of the at least two doors upon each of the respective first and second openings have a horizontal pivot axis;
   each of the at least two doors include a first blocking portion disposed upon a first side of the horizontal pivot axis, and a second counterweight portion disposed on a second side of the horizontal pivot axis that is opposite from the first side of the horizontal pivot axis.
Numbered Paragraph 2: The holding cabinet of Numbered Paragraph 1, wherein each door has a slot disposed upon a side surface thereof, wherein the horizontal pivot axis extends though the slot.
Numbered Paragraph 3: The holding cabinet of Numbered Paragraph 2, wherein the horizontal pivot axis extends through a pin.
Numbered Paragraph 4: The holding cabinet of Numbered Paragraph 3, wherein the housing receives a frame, wherein each pin is fixed to and extends from the frame, wherein the frame includes a first vertical jam, wherein an inner surface of the vertical jam faces into the receiving cavity,
   wherein each door further comprises a tab that extends outwardly from the door, wherein the tab contacts the inner surface of the vertical jam that is proximate to the respective side surface of the door when the door is in the first open position.
Numbered Paragraph 5: The holding cabinet of Numbered Paragraph 4, wherein the tab is proximate to but spaced from the inner surface of the vertical jam that is proximate to the respective side surface of the door when the door is in the second closed position.
Numbered Paragraph 6: The holding cabinet of either one of Numbered Paragraphs 4 or 5, wherein the frame is pivotably mounted to the housing with a second pivot connection, wherein the second pivot connection is vertical.
Numbered Paragraph 7: The holding cabinet of Numbered Paragraph 5, wherein the vertical jam is a first vertical jam and a second vertical jam that is parallel to and spaced from the first vertical jam, wherein when the frame is in a first position the respective inner surface of each of the first and second vertical jams face into the receiving cavity and the first vertical jam is proximate to one of the right or left vertical wall and the second vertical jam is proximate to the other of the right or left vertical wall, and when the frame is in a second position, the first vertical jam is proximate to one of the right or left vertical walls and the second vertical jam is spaced away from the other of the right or left vertical walls, wherein when the frame is in the second position, the respective inner surface of each of the first and second vertical jam do not face into the receiving cavity.
Numbered Paragraph 8: The holding cabinet of any one of Numbered Paragraphs 1-7, wherein the second counterweight portion of each of the at least two doors includes a flange that extends therefrom and the housing supports a cantilevered surface that is aligned with a top-most of the at least two doors, wherein when the top-most of the respective doors is the second closed position, portions of the flange and the cantilevered surface are aligned in parallel to each other with portions aligned such that a horizontal line extends through both the flange and the cantilevered surface.
Numbered Paragraph 9: The holding cabinet of Numbered Paragraph 8, wherein when the first and second doors within one of the first opening or the second opening are each in the closed position, the flange that extends upwardly from the second counterweight portion of a lower of the first and second doors is contacted by an inwardly facing surface of top-most of the first and second doors.
Numbered Paragraph 10: The holding cabinet of any one of Numbered Paragraphs 5-9, wherein the second counterweight portion of each of the at least two doors includes a flange that extends therefrom and the housing supports a horizontal member that is disposed vertically above and spaced from the flange extending from the second counterweight portion of a top-most door of the at least two doors when the top-most door is in the second closed position,
   wherein,
   when the top-most door of the at least two doors is initially rotated upon the pin, the flange translates with respect to the horizontal member and rotates with respect to the pin to an acute angle with respect to a vertical axis, wherein when the flange reaches a position where it is no longer vertically below the horizontal member before the tab contacts the inner surface of the vertical jam that is proximate to the respective side surface of the door, the door can be translated upwardly and also rotated with respect to the horizontal member.
Numbered Paragraph 11: The holding cabinet of Numbered Paragraph 10, wherein when the tab contacts the inner surface of the vertical jam that is proximate to the respective side surface of the door, the door is free to be slid upwardly with respect to the housing until the pin reaches an opposite end of the slot, wherein when the pin reaches the opposite end of the slot, the respective top-most door can rotate to the first open position, wherein the door is maintained in the first open position due to a center of mass of the door extending substantially over the pin.
Numbered Paragraph 12: The holding cabinet of Numbered Paragraph 11, wherein the door is maintained in the first open position additionally due to contact between the tab and the inner surface of the vertical jam that prevents the door from further rotating in a rotational direction that the door moves as it transfers from the second closed position toward the first open position.
Numbered Paragraph 13: The holding cabinet of Numbered Paragraph 10, wherein the housing supports a cantilevered surface, wherein when the top-most door is in the second closed position, portions of the respective flange and the respective cantilevered surface are aligned in parallel to each other and are aligned such that a horizontal line extends through both the flange and the cantilevered surface
Numbered Paragraph 14: The holding cabinet of any one of Numbered Paragraphs 1-13, wherein the heat treatment portion includes an air handling portion and a mechanical portion, wherein the air handling portion incudes an air handling device that when operating draws a suction from the receiving cavity and discharges air to the return portion, with the air flowing from the return portion and into the receiving cavity,
   wherein the mechanical portion includes a motor for the air handling device, further comprising at least one fan that draws outside air to flow into the mechanical portion, further comprising a filter that is disposed within the mechanical portion and proximate to a discharge of the at least one fan, with the filter removing at least a portion of dust or particulate matter from air that flows from the discharge of the at least one fan.
Numbered Paragraph 15: The holding cabinet of any one of Numbered Paragraphs 1-14, wherein the heat treatment portion is disposed above a ceiling of the receiving cavity, wherein air flows from the receiving cavity and through a plurality of holes and into the heat treatment portion, the heat treatment portion comprises an air handling device with a suction that is disposed above the plurality of holes in the ceiling, wherein the air handling device discharges air toward the return portion, wherein air flows past a heating element before entering the return portion,
   wherein the return portion comprises a left portion that is outboard of the left vertical side wall, and a right portion that is outboard of the right vertical side wall, wherein each of the left and right vertical side walls include a plurality of apertures to allow air to flow from the respective left and right portions of the return portion and into the receiving cavity.
Numbered Paragraph 16: The holding cabinet of any one of Numbered Paragraphs 1-15, wherein each of the one or more shelves is configured to receive a tray thereon, with the tray being extendable through either of the first and second openings when at least one of the at least two doors are in the first open position.

## Claims

1. A holding cabinet, comprising:
a housing that includes a receiving cavity and an air flow compartment, the receiving cavity is configured to support two or more shelves therein in a vertically stacked arrangement with respective one or more spaces within the receiving cavity disposed vertically between the two or more shelves;
the air flow compartment comprises a heat treatment portion and a return portion;
the receiving cavity comprises first and second openings and right and left vertical side walls, a ceiling above the first and second openings and the right and left vertical walls, and a floor below the first and second openings and the right and left vertical walls, the first and second openings provided upon opposite sides of the receiving cavity;
each of the first and second openings receive at least two doors that are each rotatably disposed with respect to the housing to be independently in a first open position to allow food items to be inserted within and removed from the receiving cavity and a second closed position to prevent food items from being inserted within and removed from the receiving cavity,
each of the at least two doors upon each of the respective first and second openings have a horizontal pivot axis;
each of the at least two doors include a first blocking portion disposed upon a first side of the horizontal pivot axis, and a second counterweight portion disposed on a second side of the horizontal pivot axis that is opposite from the first side of the horizontal pivot axis,
wherein each of the one or more shelves is configured to receive a tray thereon, with the tray being extendable through either of the first and second openings when at least one of the at least two doors are in the first open position.

2. The holding cabinet of claim 1, wherein each door has a slot disposed upon a side surface thereof, wherein the horizontal pivot axis extends though the slot.

3. The holding cabinet of either of claims 1 or 2, wherein the horizontal pivot axis extends through a pin.

4. The holding cabinet of claim 3, wherein the housing receives a frame, wherein each pin is fixed to and extends from the frame, wherein the frame includes a first vertical jam, wherein an inner surface of the vertical jam faces into the receiving cavity,
wherein each door further comprises a tab that extends outwardly from the door, wherein the tab contacts the inner surface of the vertical jam that is proximate to the respective side surface of the door when the door is in the first open position.

5. The holding cabinet of claim 4, wherein the tab is proximate to but spaced from the inner surface of the vertical jam that is proximate to the respective side surface of the door when the door is in the second closed position.

6. The holding cabinet of either of claims 4 or 5, wherein the frame is pivotably mounted to the housing with a second pivot connection, wherein the second pivot connection is vertical.

7. The holding cabinet of either of claims 5 or 6, wherein the vertical jam is a first vertical jam and a second vertical jam that is parallel to and spaced from the first vertical jam, wherein when the frame is in a first position the respective inner surface of each of the first and second vertical jams face into the receiving cavity and the first vertical jam is proximate to one of the right or left vertical wall and the second vertical jam is proximate to the other of the right or left vertical wall, and when the frame is in a second position, the first vertical jam is proximate to one of the right or left vertical walls and the second vertical jam is spaced away from the other of the right or left vertical walls, wherein when the frame is in the second position, the respective inner surface of each of the first and second vertical jam do not face into the receiving cavity.

8. The holding cabinet of any one of claims 1-7, wherein the second counterweight portion of each of the at least two doors includes a flange that extends therefrom and the housing supports a cantilevered surface that is aligned with a top-most of the at least two doors, wherein when the top-most of the respective doors is the second closed position, portions of the flange and the cantilevered surface are aligned in parallel to each other with portions aligned such that a horizontal line extends through both the flange and the cantilevered surface.

9. The holding cabinet of claim 8, wherein when the first and second doors within one of the first opening or the second opening are each in the closed position, the flange that extends upwardly from the second counterweight portion of a lower of the first and second doors is contacted by an inwardly facing surface of top-most of the first and second doors.

10. The holding cabinet of any one of claims 5-9, wherein the second counterweight portion of each of the at least two doors includes a flange that extends therefrom and the housing supports a horizontal member that is disposed vertically above and spaced from the flange extending from the second counterweight portion of a top-most door of the at least two doors when the top-most door is in the second closed position,
wherein,
when the top-most door of the at least two doors is initially rotated upon the pin, the flange translates with respect to the horizontal member and rotates with respect to the pin to an acute angle with respect to a vertical axis, wherein when the flange reaches a position where it is no longer vertically below the horizontal member before the tab contacts the inner surface of the vertical jam that is proximate to the respective side surface of the door, the door can be translated upwardly and also rotated with respect to the horizontal member.

11. The holding cabinet of claim 10, wherein when the tab contacts the inner surface of the vertical jam that is proximate to the respective side surface of the door, the door is free to be slid upwardly with respect to the housing until the pin reaches an opposite end of the slot, wherein when the pin reaches the opposite end of the slot, the respective top-most door can rotate to the first open position, wherein the door is maintained in the first open position due to a center of mass of the door extending substantially over the pin.

12. The holding cabinet of claim 11, wherein the door is maintained in the first open position additionally due to contact between the tab and the inner surface of the vertical jam that prevents the door from further rotating in a rotational direction that the door moves as it transfers from the second closed position toward the first open position.

13. The holding cabinet of claim 10, wherein the housing supports a cantilevered surface, wherein when the top-most door is in the second closed position, portions of the respective flange and the respective cantilevered surface are aligned in parallel to each other and are aligned such that a horizontal line extends through both the flange and the cantilevered surface

14. The holding cabinet of any one of claims 1-13, wherein the heat treatment portion includes an air handling portion and a mechanical portion, wherein the air handling portion incudes an air handling device that when operating draws a suction from the receiving cavity and discharges air to the return portion, with the air flowing from the return portion and into the receiving cavity,
wherein the mechanical portion includes a motor for the air handling device, further comprising at least one fan that draws outside air to flow into the mechanical portion, further comprising a filter that is disposed within the mechanical portion and proximate to a discharge of the at least one fan, with the filter removing at least a portion of dust or particulate matter from air that flows from the discharge of the at least one fan.

15. The holding cabinet of any one of claims 1-14, wherein the heat treatment portion is disposed above a ceiling of the receiving cavity, wherein air flows from the receiving cavity and through a plurality of holes and into the heat treatment portion, the heat treatment portion comprises an air handling device with a suction that is disposed above the plurality of holes in the ceiling, wherein the air handling device discharges air toward the return portion, wherein air flows past a heating element before entering the return portion,
wherein the return portion comprises a left portion that is outboard of the left vertical side wall, and a right portion that is outboard of the right vertical side wall, wherein each of the left and right vertical side walls include a plurality of apertures to allow air to flow from the respective left and right portions of the return portion and into the receiving cavity.
